(19) **Europäisches Patentamt / European Patent Office / Office européen des brevets**

(11) **EP 2 485 108 B1**

(12) **EUROPÄISCHE PATENTSCHRIFT**

(45) Veröffentlichungstag und Bekanntmachung des Hinweises auf die Patenterteilung:
**03.06.2015 Patentblatt 2015/23**

(51) Int Cl.:
**G05D 3/00** *(2006.01)*  **B25J 9/16** *(2006.01)*

(21) Anmeldenummer: **12153432.5**

(22) Anmeldetag: **01.02.2012**

(54) **Verfahren zum Referenzieren einer Antriebsstellung wenigstens eines elektrischen Antriebs**

Method for referencing an actuator position of at least one electric actuator

Procédé de référencement d'un poste d'entraînement d'au moins un entraînement électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2011 DE 102011003539**

(43) Veröffentlichungstag der Anmeldung:
**08.08.2012 Patentblatt 2012/32**

(73) Patentinhaber: **KUKA Roboter GmbH**
**86165 Augsburg (DE)**

(72) Erfinder: **Pecher, Franz**
**86199 Augsburg (DE)**

(74) Vertreter: **Patentanwälte**
**Funk & Böss GbR**
**Sigmundstraße 1**
**80538 München (DE)**

(56) Entgegenhaltungen:
WO-A1-03/008146  DE-A1-102006 016 196
US-A- 4 808 898  US-A1- 2005 251 110

**Beschreibung**

Die Erfindung betrifft Verfahren zum Referenzieren einer Antriebsstellung eines elektrischen Antriebs wenigstens einer Zangenhälfte einer Fertigungszange in einer Schließposition zweier Zangenhälften und ein System einer Fertigungszange, insbesondere einer Schweißzange, Clinchzange oder Crimpzange und einer jeweiligen Steuervorrichtung zum Betätigen der Fertigungszange, die eingerichtet ist, ein Verfahren solches durchzuführen.

DE 10 2006 016 196 A1 offenbart ein Verfahren zum Ermitteln der Übersetzung eines von einem bewegten Getriebe mit zwei zangenartigen gegeneinander bewegbaren Gliedern und bei Positionieren der Gliedern in jeweils wenigstens zwei bekannten Relativpositionen die Differenz der zugeordneten Motorpositionen ermittelt wird.

Die WO 03/008145 A1 offenbart ein Kalibrierungsverfahren für eine elektrische Widerstandsschweißvorrichtung. Die Widerstandsschweißvorrichtung weist von einem Roboter geführte Schweißzangen mit ein oder mehreren beweglichen Elektrodenarmen mit Elektroden auf. Die Widerstandsschweißvorrichtung wird mittels eines die Elektrodenkraft zwischen den Elektroden der Schweißzangen messenden Kraftsensors kalibriert.

Aufgabe der Erfindung ist es, ein einfaches Verfahren zum Referenzieren einer Antriebsstellung eines elektrischen Antriebs wenigstens einer Zangenhälfte einer Fertigungszange, insbesondere einer Schweißzange, Clinchzange oder Crimpzange in einer Schließposition zweier Zangenhälften anzugeben.

Die Aufgabe der Erfindung wird gelöst durch ein Verfahren zum Referenzieren einer Antriebsstellung eines elektrischen Antriebs wenigstens einer Zangenhälfte einer Fertigungszange in einer Schließposition zweier Zangenhälften, aufweisend die Schritte:

- Schließen der beiden geöffneten Zangenhälften durch elektromotorisches Betätigen des elektrischen Antriebs;

- mehrfaches Bestimmen von Ist-Positionen des wenigstens einen elektrischen Antriebs und von Schleppfehlerwerten des elektrischen Antriebs in einem Zeitintervall während des Schließens der Zangenhälften bis über einen Zeitpunkt hinaus, in dem die Schließposition erreicht ist;

- Bestimmen einer Geraden, insbesondere mittels Ausgleichsrechnung auf Grundlage der bestimmten Schleppfehlerwerte in Abhängigkeit einer diesbezüglichen Zeit-Schleppfehler-Funktion ausgehend von Schleppfehlerwerten am Zeitintervall-Ende;

- Bestimmen des Zeitpunkts des Nulldurchgangs der bestimmten Geraden der Zeit-Schleppfehler-Funktion; und

- Bestimmen derjenigen Ist-Position des wenigstens einen Antriebs als Schließposition, die dem Zeitpunkt des Nulldurchgangs der Geraden der Zeit-Schleppfehler-Funktion entspricht.

Der elektrische Antrieb kann wenigstens einen elektrischen Motor und wenigstens eine zugehörige Leistungselektronik aufweisen. Motor und Leistungselektronik können dabei Komponenten eines geregelten elektrischen Antriebs bilden. Abweichungen der Ist-Werte von Positionen des elektrischen Antriebs von Soll-Werten können Schleppfehlerwerte des geregelten elektrischen Antriebs sein.

Die Fertigungszange kann beispielsweise ein Schweißzange, eine Clinchzange oder Crimpzange sein. Als Fertigungszange kann jedoch auch ein Greifwerkzeug bzw. ein Greifer, insbesondere zur Montage im Rahmen der Fertigung eines Produktes verstanden werden. Jede Zangenhälfte weist ein Kontaktglied auf. Die beiden Kontaktglieder können durch Bewegen entweder einer einzelnen oder beider Zangenhälften aufeinander zu und voneinander weg bewegt werden. Um die eine oder beide Zangenhälften zu bewegen, kann ein Antrieb vorgesehen sein, der beispielsweise einen Elektromotor und optional ein Getriebe aufweist. Der Elektromotor kann mittels einer Antriebssteuerung angesteuert bzw. geregelt sein.

Aufgrund eines konstruktiv festgelegten Zusammenhangs entspricht eine Stellung einer Zangenhälfte einer bestimmten Stellung des Elektromotors des zugehörigen Antriebs. Die Schließposition der Fertigungszange entspricht dabei einer bestimmten Antriebsstellung. Mittels eines erfindungsgemäßen Verfahrens kann diejenige Antriebsstellung bestimmt werden, die der Schließposition der Fertigungszange entspricht. Da die Schließstellung der Fertigungszange, insbesondere im Falle einer Schweißzange, aufgrund beispielsweise eines Abbrandes der Kontaktelektroden der Schweißzangenhälften einer Drift unterworfen ist, muss diejenige Antriebsstellung regelmäßig neu bestimmt werden, die der tatsächlichen Schließposition der Fertigungszange entspricht. Ein solches Neubestimmen kann insbesondere in der automatisierten Schweißtechnik bzw. in der Robotertechnik als Justieren oder Referenzieren bezeichnet werden. Im Allgemeinen kann unter Justieren oder Referenzieren auch ein Kalibrieren verstanden werden. Alle Ausführungsformen der Erfindung können also auch als ein Verfahren zum Kalibrieren einer Antriebsstellung eines elektrischen Antriebs wenigstens einer Zangenhälfte einer Fertigungszange in einer Schließposition zweier Zangenhälften verstanden werden.

Mittels eines erfindungsgemäßen Verfahrens kann ein Referenzieren insbesondere kraftsensorlos, d.h. ohne Verwendung eines Kraftsensors erfolgen. Das heißt die Fertigungszange kann ohne einen Kraftsensor ausgebildet sein, der sonst üblicher Weise zum Detektieren einer Schließstellung benötigt wird.

Das Verfahren setzt eine geöffnete Fertigungszange voraus. Vor einem Schließen der beiden geöffneten Zangenhälften durch elektromotorisches Betätigen des Antriebs kann gegebenenfalls, insbesondere bei einer bereits geschlossenen Fertigungszange ein Öffnen der Fertigungszange vorgesehen werden.

Bei der in einem Zeitintervall während des Schließens der Zangenhälften mehrfachen Bestimmung der Ist-Positionen des wenigstens einen Antriebs kann zu jedem die jeweilige Ist-Position repräsentierenden Positionswert ein zugehöriger Zeitwert, insbesondere der Zeitwert zum Zeitpunkt der Messung zugeordnet sein, insbesondere gespeichert werden.

Nachdem diejenige Ist-Position des wenigstens einen Antriebs als Schließposition bestimmt, insbesondere errechnet ist, kann diese Ist-Position als aktuelle bzw. neue Schließposition einer Steuerung der Fertigungszange zugewiesen werden, insbesondere in einer die Fertigungszange ansteuernden Steuerungsvorrichtung abgelegt, d.h. gespeichert werden.

In einer Ausführung des Verfahrens kann die Schließposition der beiden Zangenhälften im Moment eines gegenseitigen Berührens zweier Kontaktglieder der beiden Zangenhälften erreicht sein.

In einer anderen Ausführung des Verfahrens kann die Schließposition der beiden Zangenhälften im Moment erreicht sein, wenn die Kontaktglieder der beiden Zangenhälften gegenüberliegende Seiten eines Messkörpers bekannter Größe berühren. Aus der bekannten Größe und/oder Gestalt des Messkörpers und der sich in dieser Schließposition einstellenden Öffnungsweite der beiden Zangenhälften kann auf Grundlage der geometrischen konstruktiven Gegebenheiten an der Fertigungszange auf die tatsächliche Schließposition, d.h. auf die Schließposition bei der die zwei Kontaktglieder der beiden Zangenhälften sich gegenseitigen Berühren geschlossen werden, insbesondere berechnet werden.

In allen Ausführungen des Verfahrens kann ein Bestimmen der Geraden, insbesondere einer Regressionsgeraden durch Regression als Ausgleichsrechnung insbesondere mit bekannten mathematischen Algorithmen, durchgeführt werden.

Eine Regression eines Schleppfehlers kann hierbei bis zu der Momentengrenze berechnet werden, um auf eine Berührposition des Greif- oder Zangen-Werkzeugs nach dem Überschreiten der Berührposition zurück zu schließen.

In einer weiteren Ausführungsform weist der Schritt des Bestimmens der Regression des Schleppfehlers das Bestimmen einer Regressionsgeraden auf. Die Regressionsgerade kann dabei Schleppfehlerwerte, welche z.B. monoton steigen, annähern und als eine Funktion ausdrücken. Des Weiteren stellt die Regressionsgerade eine besonders einfach zu bestimmende Regression des Schleppfehlers dar.

Des Weiteren kann die Regressionsgerade ab einem erfassten Schleppfehlerwert bis zum Erreichen der Momentengrenze bestimmt werden. Vor dem Erreichen der Momentengrenze und dem Aufbringen einer vorbestimmten Schweißkraft durch die Schweißzange berührt die Schweißzange mit ihren Zangenarmen zunächst das zu schweißende Werkstück, bevor der eigentliche Kraftaufbau der Schweißkraft erfolgt. Daher kann eine solche Regressionsgerade in Ausführungsformen besonders geeignet sein, um auf einen Berührpunkt der Schweißzange zurück zu schließen.

In allen Ausführungen des Verfahrens kann das mehrfache Bestimmen der Ist-Positionen des wenigstens einen Antriebs und/oder der Schleppfehlerwerte des elektromotorisch angesteuerten Antriebs in vorgegebenen, insbesondere konstanten Positionsschritten und/oder Zeitschritten erfolgen. Alle Ist-Positionen, Schleppfehlerwerte und Zeitwerte können gespeichert, insbesondere in einer Steuerung der Fertigungszange abgelegt bzw. gespeichert werden.

In einer Variante können die Ist-Positionen und die Schleppfehlerwerte zeitsynchron bestimmt werden. So kann beispielsweise jeweils eine Ist-Position und ein zugehöriger Schleppfehlerwert zum selben Zeitpunkt bestimmt und gespeichert werden.

In allen Ausführungen des Verfahrens kann das Schließen der beiden geöffneten Zangenhälften durch elektromotorisches Betätigen des Antriebs mit einer konstanten Geschwindigkeit, insbesondere einer konstanten Drehzahl eines Elektromotors, welcher den Antrieb betätigt, erfolgen. Dadurch können in Ausführungsformen Störungen, wie gegebenenfalls auftretende Reibkräfte bei der Fertigungszange, welche in einem Offset eines Schleppfehler-Signals oder einem kurzzeitigen Ansteigen des Schleppfehler-Signals resultieren können, zumindest teilweise kompensiert oder im Wesentlichen eliminiert werden.

Die als Schließposition bestimmte Ist-Position des wenigstens einen Antriebs, die dem Zeitpunkt des Nulldurchgangs der Geraden der Zeit-Schleppfehler-Funktion entspricht, kann unter Einbeziehen eines mittleren Schleppfehler, einer Steigung der Regressionsgeraden des Schleppfehlers und/oder eines Schleppfehler-Offsets bestimmt werden.

Die Fertigungszange kann beispielsweise eine Schweißzange, eine Clinchzange oder eine Crimpzange sein.

Im Fall einer Schweißzange werden die Zangenhälften von Schweißzangenhälften gebildet, die als Kontaktglieder Kontaktelektroden aufweisen.

Im Fall einer Clinchzange werden die Zangenhälften von Clinchzangenhälften gebildet. Eine Clinchzange findet Verwendung beim Fertigungsverfahren des Clinchens, das auch als Durchsetzfügen bezeichnet wird. Durchsetzfügen ist ein Verfahren zum Verbinden von Blechen ohne Verwendung eines Zusatzwerkstoffes. Im Fall einer Crimpzange werden die Zangenhälften von Crimpzangenhälften gebildet. Unter Crimpen kann ein Fügeverfahren verstanden werden, bei dem zwei Komponenten durch plastische Verformung miteinander verbunden werden. Crimpen ist eine spezielle Form des Bördelns. Clinchzangen und Crimpzangen weisen jeweils einen Stempel und eine Matrize als Kontaktglieder auf.

In einem erfindungsgemäßen System einer Schweißzange und einer Steuervorrichtung zum Betätigen der Schweißzange, kann die Steuervorrichtung eingerichtet sein, eine oder mehrere der beschriebenen Ausführungen des erfindungsgemäßen Verfahrens durchzuführen.

In einem erfindungsgemäßen System einer Clinchzange und einer Steuervorrichtung zum Betätigen der Clinchzange, kann die Steuervorrichtung eingerichtet sein, eine oder mehrere der beschriebenen Ausführungen des erfindungsgemäßen Verfahrens durchzuführen.

In einem erfindungsgemäßen System einer Crimpzange und einer Steuervorrichtung zum Betätigen der Crimpzange, kann die Steuervorrichtung eingerichtet sein, eine oder mehrere der beschriebenen Ausführungen des erfindungsgemäßen Verfahrens durchzuführen.

In einem erfindungsgemäßen System eines Greifwerkzeugs und einer Steuervorrichtung zum Betätigen des Greifwerkzeugs, kann die Steuervorrichtung eingerichtet sein, eine oder mehrere der beschriebenen Ausführungen des erfindungsgemäßen Verfahrens durchzuführen. Die Steuervorrichtung zum Betätigen des Greifwerkzeugs kann eine Robotersteuerung eines Industrieroboters sein, der insbesondere mit dem Greifwerkzeug verbunden ist und dieses führt.

Eine konkrete Ausführungsform der Erfindung ist am Beispiel einer Schweißzange exemplarisch in den beigefügten schematischen Figuren erläutert.

Es zeigen:

Fig. 1 eine schematische Ansicht einer Schweißzange mit X-förmig angeordneten Zangenarmen,

Fig. 2 einen Industrieroboter mit einem mehrere Glieder aufweisenden Roboterarm, und

Fig. 3 eine Abbildung eines Diagramms mit einer Schleppfehlerkennlinie.

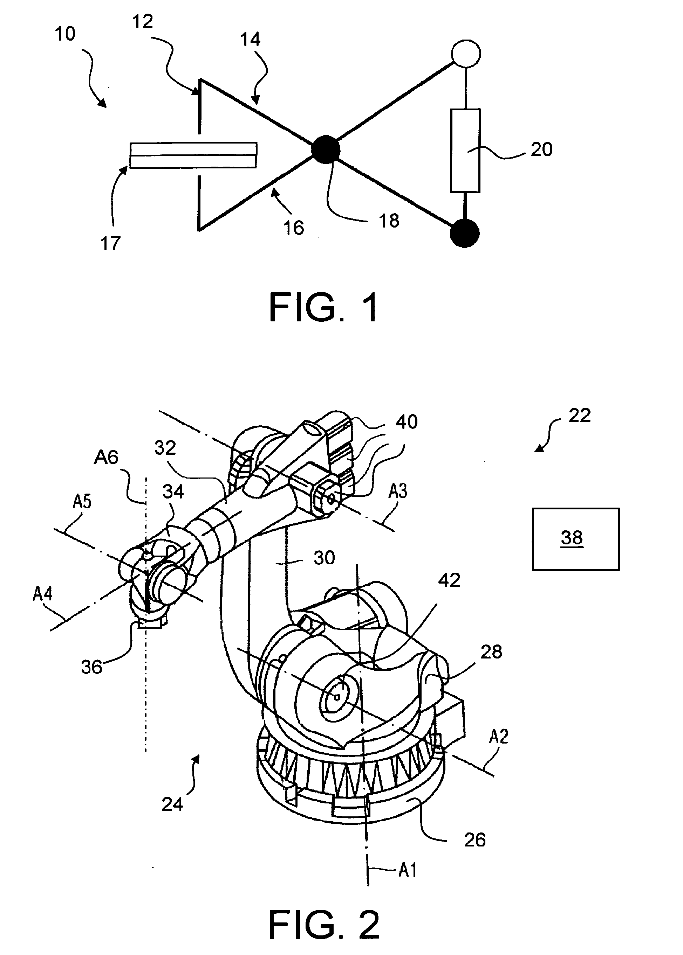

Im Folgenden wird ein Verfahren zum Referenzieren einer Antriebsstellung eines Antriebs wenigstens einer Zangenhälfte einer elektromotorischen Fertigungszange in einer Schließposition zweier Zangenhälften ohne Kraftsensoren, am Beispiel einer Schweißzange erläutert. Solche Zangenwerkzeuge können, wie dargstellt Schweißzangen, aber auch Clinchzangen oder Crimpzangen sein. Diese können ohne Kraftsensor auskommen. Insbesondere können sensorlose, insbesondere kraftsensorlose Zangenwerkzeuge dabei beispielsweise mit einem Roboterarm eines Roboters verbunden sein, wie er in dem Ausführungsbeispiel in nachfolgender Fig. 2 gezeigt ist.

Fig. 1 zeigt als Beispiel für eine Fertigungszange 10 eine Schweißzange 12 beispielsweise mit X-förmig angeordneten Zangenhälften 14, 16. An ihrem vorderen Ende weisen die Zangenhälften 14, 16 beispielsweise jeweils eine Elektrode z.B. mit einer Elektrodenkappe auf (nicht dargestellt). Wie in Figur 1 gezeigt ist, ist die erste Zangenhälfte 14 beweglich um eine Schwenkachse 18 ausgebildet. Die zweite Zangenhälfte 16 kann fest oder beweglich sein. Zum Verschwenken der ersten Zangenhälfte 14 um die Schwenkachse 18 relativ zu der zweiten Zangenhälfte 16 ist ein Antrieb 20, hier ein Zangenmotor vorgesehen. Der Antrieb 20 ist beispielsweise ein elektrischer Antrieb, z.B. ein Elektromotor.

Mittels des Antriebs 20 kann die erste Zangenhälfte 14 relativ zu der zweiten Zangenhälfte 16 zwischen einer geschlossenen Position und einer geöffneten Position bewegt werden. In der geschlossenen Position sind die beiden Zangenhälften 14, 16 dabei beispielsweise soweit einander angenähert, dass sie auf unterschiedlichen Seiten mit einem Messkörper 17 bekannter Dicke in Kontakt sind.

Die Fertigungszange 10, wie die in Fig. 1 gezeigte Schweißzange 12, kann stationär angeordnet sein oder kann von einem Industrieroboter 22, wie beispielhaft in nachfolgender Fig. 2 gezeigt, oder einem anderen Manipulator bewegt werden.

Die Fig. 2 zeigt in einer perspektivischen Darstellung ein Ausführungsbeispiel eines Industrieroboters 22 mit beispielsweise einem Roboterarm 24. Der Roboterarm 24 umfasst im Falle des in Fig. 2 gezeigten Ausführungsbeispiels mehrere nacheinander angeordnete und mittels Gelenken verbundene Glieder. Im dargestellten Ausführungsbeispiel weist der Industrieroboter 22 ein Gestell 26 auf. Dabei ist ein relativ zu dem Gestell 26 drehbar gelagertes Karussell 28 vorgesehen. Das Karussell 28 ist relativ zu dem Gestell 26 um eine vertikal verlaufende Achse A1, die auch als Achse 1 bezeichnet wird, drehbar gelagert. Weitere Glieder des Roboterarms 24 sind im Falle des vorliegenden Ausführungsbeispiels eine Schwinge 30, ein Ausleger 32 und eine vorzugsweise mehrachsige Roboterhand 34 mit einem Flansch 36. Die Schwinge 30 ist am unteren Ende z.B. an einem nicht näher dargestellten Schwingenlagerkopf auf dem Karussell 28 um eine vorzugsweise horizontale Achse A2, die auch als Achse 2 bezeichnet wird, schwenkbar gelagert. Am oberen Ende der Schwinge 30 ist wiederum um eine ebenfalls vorzugsweise horizontale Achse A3 der Ausleger 32 schwenkbar gelagert. Dieser trägt endseitig die Roboterhand 34 mit ihren vorzugsweise drei Achsen A4, A5, A6.

Um den Industrieroboter 22 bzw. dessen Roboterarm 24 zu bewegen, umfasst dieser in allgemein bekannter Weise mit einer Steuervorrichtung 38 verbundene Antriebe, die insbesondere elektrische Antriebe sind. In der Figur 1 sind nur einige der elektrischen Motoren 40, 42 dieser Antriebe gezeigt.

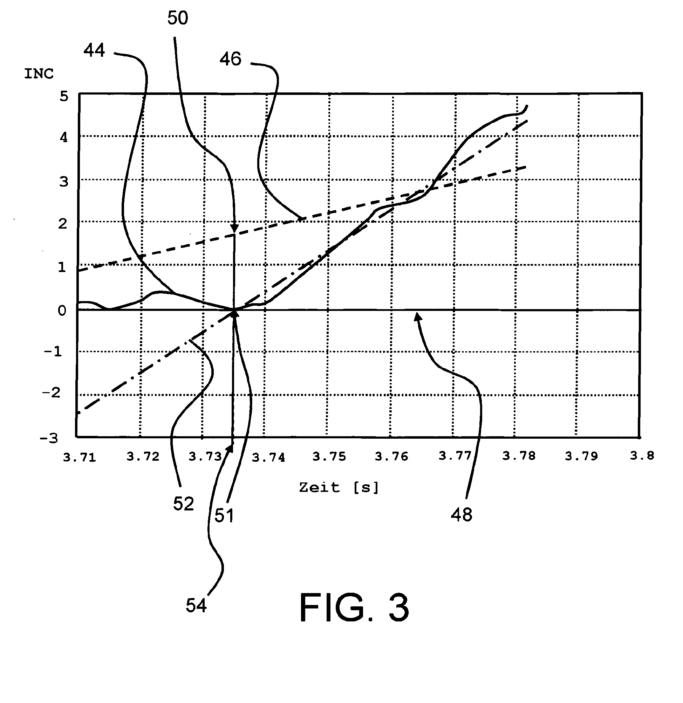

An der Roboterhand 34 oder deren Flansch 36 kann eine Fertigungszange 10, wie beispielsweise die Schweißzange 12 gemäß Fig. 1, befestigt sein und gemäß dem nachfolgend mit Bezug auf Fig. 3 beschriebenen Verfahren referenziert werden.

Bislang gibt es Verfahren zum automatischen Justieren oder Referenzieren, d.h. des Setzens einer Nullposition des Werkzeugs, von Schweißzangen und ähnlich gestalteten Werkzeugen. Diese Verfahren stützen sich allerdings auf die Auswertung eines Signals eines internen oder externen Kraftsensors an der Schweißzange oder dem Zangenmotor, mit welchem die Schweißzange bewegt wird.

Über den Anstieg des Kraftsensorsignals kann ein Berührpunkt der Elektroden der Schweißzangen ermittelt werden und die Zange danach auf den so ermittelten Berührpunkt kalibriert werden. Der Berührpunkt ist dabei beispielsweise der Punkt, bei welcher die Schweißzange oder genauer gesagt die Elektroden der beiden Zangenarme der Schweißzange mit einem Werkstück oder gegenseitig in Berührung oder in Kontakt kommen.

Diese Verfahren sind aber auf Schweißzangen oder Werkzeuge ohne Kraftsensor nicht anwendbar. Kraftsensorlose Schweißzangen haben jedoch die größte Verbreitung auf dem Markt in den installierten Fertigungszellen.

Daher wird ein Verfahren bereitgestellt, mit dessen Hilfe sich auch kraftsensorlose Greifwerkzeuge oder Zangenwerkzeuge, wie beispielsweise kraftsensorlose Schweißzangen, Clinchzangen oder Crimpzangen, automatisch kalibrieren lassen, also ohne Eingriff oder Zuhilfenahme des Menschen.

Fig. 3 zeigt eine Abbildung einer Schleppfehlerkennlinie 44 für ein Greif- oder ein Zangen-Werkzeug, beispielsweise die zuvor beschriebene Schweißzange.

In dem in Fig. 3 dargestellten Diagramm sind die Ist-Positionen 46 der Schweißzange in Abhängigkeit von der Zeit als gestrichelte Linie verbunden dargestellt. Die Zeit ist dabei z.B. in Sekunden auf der X-Achse aufgetragen und die Position der Schweißzange z.B. in Inkrementen INC auf der Y-Achse.

Wie aus dem Diagramm entnommen werden kann, wird das Greifwerkzeuge oder Zangenwerkzeuge, z.B. eine kraftsensorlose Schweißzange, mit einer konstanten Geschwindigkeit in eine geschlossene Position bewegt, in der die beiden Zangenarme der Schweißzange dabei soweit einander angenähert, dass sie auf unterschiedlichen Seiten beispielsweise mit einem Werkstück, hier einem Schweißobjekt, in Kontakt kommen und schließlich mit einem vorbestimmten Schweißdruck an das Werkstück bzw. Schweißobjekt angepresst werden.

Des Weiteren sind als durchgezogene Linie Schleppfehlerwerte 44 oder gefilterte Schleppfehlerwerte der Schweißzange dargestellt. Der Schleppfehler ist dabei die Differenz aus Soll-Position und Ist-Position des Greif- oder Zangenwerkzeugs, hier z.B. der Schweißzange bzw. deren beweglichen Schweißzangenarms im Falle einer X-Schweißzange, zu den jeweiligen Zeitpunkten.

Der Schleppfehler 44 kann dabei beispielsweise aufgrund eines überwachten Stroms des Zangenmotors bestimmt werden, welcher die Schweißzange betätigt.

Der Schleppfehler, wie in dem Diagramm in Fig. 3 gezeigt ist, schwankt anfangs nahe um eine Nulllage 48, in welcher der Schleppfehler Null ist, so lange sich die Zangenarme der Schweißzange während des Schließens der Schweißzange nicht berühren oder der Berührpunkt der Schweißzange durch den beweglichen Zangenarm nicht erreicht ist.

Sobald die Schweißzange jedoch in der geschlossenen Position ist und die Zangenarme der Schweißzange den Berührpunkt erreicht haben in dem sie sich berühren oder ein Werkstück bzw. ein Schweißobjekt, und der Aufbau der Schweißkraft beginnt, steigt der Schleppfehler 44 oder der Verlauf des Schleppfehlers an, wie in Fig. 3 gezeigt ist.

Zur Bestimmung des Berührpunktes 50 wird in einer Ausführung der Erfindung eine Schleppfehler-Regression bestimmt, welche in Fig. 3 als strich-punktierte Linie eingezeichnet ist. In dem vorliegenden Ausführungsbeispiel wie es in Fig. 3 gezeigt ist, wird als Schleppfehler-Regression eine Regressionsgerade 52 des Schleppfehlers bestimmt, welche als gepunktete Linie in dem Diagramm eingezeichnet ist. Der Nulldurchgang dieser Regressionsgeraden 52 in dem Punkt 51 entspricht dann zumindest in sehr guter Näherung dem Zeitpunkt bzw. Berührzeitpunkt 54 an dem die Zangenarme der Schweißzange den Berührpunkt erreicht haben.

Ein Justieren oder Referenzieren eines Greif- oder Zangen-Werkzeugs, wie beispielsweise der zuvor beschriebenen Schweißzange, folgt nun folgendem zu automatisierenden Verfahren.

Man schließt das Greif- oder Zangen-Werkzeug beispielsweise mit einer niedrigen oder konstanten Geschwindigkeit oder einer niedrigen oder konstanten Drehzahl des Antriebs des Greif- oder Zangen-Werkzeugs. Dabei ergibt sich ein Verlauf der Ist-Position 46 des Greif- oder Zangen-Werkzeugs, wie er in dem Ausführungsbeispiel in Fig. 3 mit einer gestrichelten Linie dargestellt ist.

In definierten Positionsschritten oder Zeitschritten kann dabei überprüft werden, ob eine zuvor zum Schutz des Greif-oder Zangen-Werkzeugs, hier der Schweißzange, gesetzte Momentengrenze schon erreicht ist.

Die Aufbringung der Schweißkraft oder Elektrodenkraft bei einer Schweißzange erfolgt in der Regel in einem Momentenbetrieb. Dabei wird zur Aufbringung einer gewünschten Schweißkraft der Schweißzange ein dieser Schweißkraft entsprechender Motorstrom vorgegeben, um damit ein definiertes Motormoment des Antriebs der Schweißzange zu erreichen, mit welchem die Schweißzange betätigt wird.

Die Momentengrenze, welche mit der Schweißkraft korreliert, kann so gewählt werden, dass die Momentengrenze beispielsweise einer vorbestimmten aufzubringenden Schweißkraft oder Elektrodenkraft der Schweißzange entspricht.

Während des gesamten Vorgangs des Schließens des Greif- oder Zangen-Werkzeugs werden in Abständen, insbesondere in zyklischen Abständen, d.h. z.B. in vorbestimmten Positionsschritten oder Zeitschritten, die aktuellen Positionsdaten des Greif- oder Zangen-Werkzeugs und der Schleppfehler des Greif-oder Zangen-Werkzeugs bestimmt und gespeichert. Der Schleppfehler entspricht dabei, wie zuvor beschrieben, der Differenz aus der Soll-Position und der Ist-Position des Greif- oder Zangen-Werkzeugs.

Sobald die Momentengrenze erreicht ist und sich die Zangenarme der Schweißzange berühren und die vorbestimmte Schweißkraft aufgebaut ist, kann aus den gespeicherten, beispielsweise bei einer konstanten Solldrehzahl monoton ansteigenden Schleppfehlerwerten, nach dem Überschreiten des Berührpunktes 50 zurück auf den Berührpunkt 50 oder die Justageposition des Greif- oder Zangen-Werkzeugs geschlossen werden.

Hierfür errechnet man in einer Ausführungsform eine Regression der Schleppfehlerwerte. Wie in dem Ausführungsbeispiel in Fig. 3 gezeigt ist kann beispielsweise eine Regressionsgerade 52 durch die gemessenen Schleppfehlerwerte berechnet werden. Die Regressionsgerade 52 ist in Fig. 3, wie zuvor beschrieben, durch eine strich-punktierte Linie dargestellt.

Die Regressionsgerade 52 kann dabei beispielsweise ab einem z.B. empirisch ermittelten Schleppfehlerwert bis zum Erreichen der Momentengrenze und damit einer vorbestimmten Schweißkraft berechnet werden.

Diese Schleppfehlergrenze sollte dabei vorzugsweise nur noch durch den Kraftaufbau, hier Schweißkraftaufbau, und vorzugsweise nicht mehr durch Reibungskräfte verursacht werden können.

Der Nulldurchgang dieser Regressionsgeraden 52 entspricht dann zumindest in sehr guter Näherung dem Zeitpunkt 54 an dem die Berührung durch die beiden Werkzeugteile bzw. Greif- oder Zangenarme des Greif- oder Zangen-Werkzeugs, beispielsweise der Elektrodenkappen der beiden Elektroden- oder Zangenarme der Schweißzange, stattgefunden hat.

Wie in dem Ausführungsbeispiel in Fig. 3 gezeigt ist, kann die Ist-Position des Greif- oder Zangen-Werkzeugs dabei beispielsweise in Inkrementen INC von 1000 INC und der Schleppfehlerwert in Inkrementen INC von z.B. 0,01 INC bestimmt sein.

Anhand der bestimmten Schleppfehlerwerte kann nun ab einem z.B. empirisch ermittelten Schleppfehlerwert bis zum Erreichen der Momentengrenze eine Regressionsgerade 52 berechnet werden. Dazu werden Schleppfehlerwerte aus dem Bereich verwendet, in welchem der Schleppfehler ansteigt, z.B. monoton ansteigt, wie in Fig. 3 gezeigt ist.

Durch ein insbesondere zeitsynchrones Speichern der Positionsdaten und der Schleppfehlerdaten des Greif-oder Zangen-Werkzeugs, hier z.B. der Schweißzange, kann auf einfachem Weg auch die Berührposition 50 errechnet werden.

Die beispielsweise in den Lagern und Elektrodenführungen der Schweißzange auftretenden Reibkräfte haben auf dieses Verfahren keinen Einfluss, da sie entweder zu einem konstanten Offset bzw. konstanten Versatz des Schleppfehlers-Signals oder einem kurzzeitigen Ansteigen im Schleppfehler-Signal führen. Beide Störungen werden aus der Ermittlung des Berührungspunktes 50 eliminiert, wenn man den mittleren Schleppfehler während z.B. einer Konstantfahrphase (Schleppfehler Mittel Konstantfahrt) vom Y-Offset bzw. Y-Versatz der Regressionsgeraden durch den ansteigenden Schleppfehler abzieht. Bei einer Konstantfahrphase wird das Greif- oder Zangen-Werkzeug mit einer konstanten Geschwindigkeit oder konstanten Drehzahl des Greif- oder Zangenmotors geschlossen.

Somit ergeben sich folgende Formeln:

```
Schleppfehler_während_Kraftaufbau = (Schleppfehler_Steigung x
Zeit) + Schleppfehleroffset

Berührzeitpunkt = (Schleppfehler_Mittel_Konstantfahrt -
Schleppfehleroffset) / Schleppfehler_Steigung

Justageposition = Berührungsposition = Greif- oder Zangen-
Werkzeugposition (Berührzeitpunkt)
```

Sollte sich dabei herausstellen, dass der berechnete Berührpunkt 50 vor der Startposition der Messfahrt liegt, so ist davon auszugehen, dass das Greif- oder Zangen-Werkzeug zu Beginn der Messfahrt schon geschlossen war. Daher beginnt die erneute Suchfahrt bzw. Messfahrt ein ausreichendes Stück vor dem im ersten Schritt ermittelten Berührpunkt. Mit anderen Worten, die Startposition der Messfahrt wird so gewählt, bis oder dass sie vor dem Berührpunkt der Schweißzange liegt.

Dieses Verfahren kann durch eine iterative Wiederholung der Messung noch verfeinert werden.

Zur automatischen Ermittlung des Berührpunkts oder der Justageposition des Werkzeugs wird dieses Verfahren dadurch, dass das zuvor beschriebene Verfahren in einer Steuerung des Werkzeugs oder Roboters automatisiert bzw. programmiert wird.

Das Greifwerkzeug oder Zangenwerkzeug kann neben einem Roboter auch über einen anderen Manipulator bewegt werden oder auch stationär vorgesehen sein.

## Patentansprüche

1. Verfahren zum Referenzieren einer Antriebsstellung eines elektrischen Antriebs (20) wenigstens einer Zangenhälfte (14, 16) einer Fertigungszange (10, 12) in einer Schließposition zweier Zangenhälften(14, 16), aufweisend die Schritte:

   - Schließen der beiden geöffneten Zangenhälften (14, 16) durch elektromotorisches Betätigen des Antriebs (20) ;
   - mehrfaches Bestimmen von Ist-Positionen (46) des wenigstens einen elektrischen Antriebs (20) und von Schleppfehlerwerten (44) des elektrischen Antriebs (20) in einem Zeitintervall während des Schließens der Zangenhälften (14, 16) bis über einen Zeitpunkt hinaus, in dem die Schließposition erreicht ist;
   - Bestimmen einer Geraden, insbesondere mittels Ausgleichsrechnung auf Grundlage der bestimmten Schleppfehlerwerte (44) in Abhängigkeit einer diesbezüglichen Zeit-Schleppfehler-Funktion ausgehend von Schleppfehlerwerten (44) am Zeitintervall-Ende;
   - Bestimmen des Zeitpunkts des Nulldurchgangs der bestimmten Geraden der Zeit-Schleppfehler-Funktion; und
   - Bestimmen derjenigen Ist-Position (46) des wenigstens einen elektrischen Antriebs (20) als Schließposition (50), die dem Zeitpunkt des Nulldurchgangs der Geraden der Zeit-Schleppfehler-Funktion entspricht.

2. Verfahren nach Anspruch 1, bei dem die Schließposition der beiden Zangenhälften (14, 16) im Moment eines gegenseitigen Berührens zweier Kontaktglieder der beiden Zangenhälften (14, 16) erreicht ist.

3. Verfahren nach Anspruch 1, bei dem die Schließposition der beiden Zangenhälften (14, 16) im Moment erreicht ist, wenn Kontaktglieder der beiden Zangenhälften (14, 16) gegenüberliegende Seiten eines Messkörpers (17) bekannter Größe berühren.

4. Verfahren nach einem der Ansprüche 1 bis 3, bei dem ein Bestimmen der Geraden, insbesondere einer Regressionsgeraden (52) durch Regression als Ausgleichsrechnung durchgeführt wird.

5. Verfahren nach einem der Ansprüche 1 bis 4, bei dem das mehrfache Bestimmen der Ist-Positionen (46) des wenigstens einen Antriebs (20) und/oder der Schleppfehlerwerte (44) des elektromotorisch angesteuerten Antriebs (20) in vorgegebenen, insbesondere konstanten Positionsschritten und/oder Zeitschritten erfolgt.

6. Verfahren nach Anspruch 5, bei dem die Ist-Positionen (46) und die Schleppfehlerwerte (44) zeitsynchron bestimmt werden.

7. Verfahren nach einem der Ansprüche 1 bis 6, bei dem das Schließen der beiden geöffneten Zangenhälften (14, 16) durch elektromotorisches Betätigen des Antriebs (20) mit einer konstanten Geschwindigkeit, insbesondere einer konstanten Drehzahl eines Elektromotors, welcher den Antrieb (20) betätigt, erfolgt.

8. Verfahren nach Anspruch 7, bei dem die als Schließposition bestimmte Ist-Position (46) des wenigstens einen Antriebs (20), die dem Zeitpunkt des Nulldurchgangs der Geraden der Zeit-Schleppfehler-Funktion entspricht, unter Einbeziehen eines mittleren Schleppfehlers, einer Steigung der Regressionsgeraden (52) eines Schleppfehlers und/oder einem Schleppfehler-Offset bestimmt wird.

9. System einer Schweißzange (12) und einer Steuervorrichtung zum Betätigen der Schweißzange (12), die eingerichtet ist, ein Verfahren nach einem der Ansprüche 1 bis 8 durchzuführen.

10. System einer Clinchzange und einer Steuervorrichtung zum Betätigen der Clinchzange, die eingerichtet ist, ein Verfahren nach einem der Ansprüche 1 bis 8 durchzuführen.

11. System einer Crimpzange und einer Steuervorrichtung zum Betätigen der Crimpzange, die eingerichtet ist, ein Verfahren nach einem der Ansprüche 1 bis 8 durchzuführen.

12. System eines Greifwerkzeugs und einer Steuervorrichtung zum Betätigen des Greifwerkzeugs, die eingerichtet ist, ein Verfahren nach einem der Ansprüche 1 bis 8 durchzuführen.

**Claims**

1. Method for referencing an actuator position of an electric actuator (20) of at least one gripper half (14, 16) of a production gripping tool (10, 12) in a closed position of two gripper halves (14, 16), comprising the steps:

   - closing the two open gripper halves (14, 16) by operating the actuator (20) by electric motor;
   - repeatedly determining actual positions (46) of the at least one electric actuator (20) and tracking error values (44) of the electric actuator (20) in a time period during the closing of the gripper halves (14, 16) until after the moment at which the closed position has been reached;
   - determining a straight line, in particular by means of an adjustment calculation on the basis of the determined tracking error values (44) depending on a related time tracking error function, based on tracking error values (44) at the end of the time period;
   - determining the moment of zero crossing of the determined straight line of the time tracking error function; and
   - determining the actual position (46) of the at least one electric actuator (20) as the closed position (50), which corresponds to the moment of zero crossing of the straight line of the time tracking error function.

2. Method according to claim 1, in which the closed position of the two gripper halves (14, 16) is reached at the moment of mutual contact between two contact elements of the two gripper halves (14, 16).

3. Method according to claim 1, in which the closed position of the two gripper halves (14, 16) is reached at the moment when contact elements of the two gripper halves (14, 16) are touching opposite sides of a measurement body (17) of known size.

4. Method according to one of claims 1 to 3, in which the straight line, in particular a regression line (52), is determined by regression as an adjustment calculation.

5. Method according to one of claims 1 to 4, in which the repeated determining of the actual positions (46) of the at least one actuator (20) and/or the tracking error values (44) of the electric motor driven actuator (20) is performed in predefined, in particular constant position steps and/or time steps.

6. Method according to claim 5, in which the actual positions (46) and the tracking error values (44) are determined synchronously.

7. Method according to one of claims 1 to 6, in which the closing of the two open gripper halves (14, 16) is performed by means of the electric-motor operation of the actuator (20) at a constant speed, in particular a constant rotational speed of an electric motor which operates the actuator (20).

8. Method according to claim 7, in which the actual position (46) of the at least one actuator defined as the closed position (20), which corresponds to the moment of zero crossing of the straight line of the time tracking error function, is determined using a mean tracking error, a gradient of the regression line (52) of a tracking error and/or a tracking error offset.

9. System of a welding gun (12) and a control device for operating the welding gun (12), which is configured to carry out a method according to one of claims 1 to 8.

10. System of a clinching tool and a control device for operating the clinching tool, which is configured to carry out a method according to one of claims 1 to 8.

**11.** System of a crimping tool and a control device for operating the crimping tool, which is configured to carry out a method according to one of claims 1 to 8.

**12.** System of a gripping tool and a control device for operating the gripping tool, which is configured to carry out a method according to one of claims 1 to 8.

**Revendications**

**1.** Procédé de référencement d'une position d'entraînement d'un entraînement électrique (20) d'au moins une moitié de pince (14, 16) d'une pince de fabrication (10, 12) dans une position de fermeture de deux moitiés de pince (14, 16), présentant les étapes suivantes:

- fermeture des deux moitiés de pince (14, 16) ouvertes par actionnement électromoteur de l'entraînement (20) ;
- détermination multiple de positions effectives (46) dudit au moins un entraînement électrique (20) et de valeurs d'erreurs de poursuite (44) de l'entraînement électrique (20) dans un intervalle de temps pendant la fermeture des moitiés de pince (14, 16) jusqu'au-delà d'un moment où la position de fermeture est atteinte ;
- détermination d'une droite, en particulier au moyen d'un calcul de compensation sur la base des valeurs d'erreurs de poursuite (44) en fonction d'une fonction temps-erreur de poursuite à ce sujet, en partant de valeurs d'erreurs de poursuite (44) à la fin de l'intervalle de temps ;
- détermination du moment du passage à zéro de droites déterminées de la fonction temps-erreur de poursuite ; et
- détermination de la position effective (46) dudit au moins un entraînement électrique (20) en tant que position de fermeture (50), laquelle correspond au moment du passage à zéro de la droite de la fonction temps-erreur de poursuite.

**2.** Procédé selon la revendication 1, dans lequel la position de fermeture des deux moitiés de pince (14, 16) est atteinte au moment où deux membres de contact des deux moitiés de pince (14, 16) se touchent mutuellement.

**3.** Procédé selon la revendication 1, dans lequel la position de fermeture des deux moitiés de pince (14, 16) est atteinte au moment où des membres de contact des deux moitiés de pince (14, 16) viennent toucher des côtés opposés d'un corps de mesure (17) d'une grandeur connue.

**4.** Procédé selon l'une des revendications 1 à 3, dans lequel une détermination de la droite, en particulier d'une droite de régression (52) est effectuée par régression en tant que calcul de compensation.

**5.** Procédé selon l'une des revendications 1 à 4, dans lequel la détermination multiple des positions effectives (46) dudit au moins un entraînement (20) et/ou des valeurs d'erreurs de poursuite (44) de l'entraînement (20) piloté par moteur électrique dans des incréments de position et/ou des incréments de temps prédéterminés, en particulier constants.

**6.** Procédé selon la revendication 5, dans lequel les positions effectives (46) et les valeurs d'erreurs de poursuite (44) sont déterminées de manière synchrone.

**7.** Procédé selon l'une des revendications 1 à 6, dans lequel la fermeture des deux moitiés de pince (14, 16) ouvertes est effectuée par l'actionnement électromoteur de l'entraînement (20) avec une vitesse constante, en particulier une vitesse de rotation constante d'un moteur électrique qui actionne l'entraînement (20).

**8.** Procédé selon la revendication 7, dans lequel la position effective (46) dudit au moins un entraînement (20), qui correspond au moment du passage à zéro de la droite de la fonction temps-erreur de poursuite, est déterminée en impliquant une erreur de poursuite moyenne, une croissance de la droite de régression (52) d'une erreur de poursuite et/ou d'un offset d'erreur de poursuite.

**9.** Système d'une pince de soudage (12) et d'un dispositif de commande pour actionner la pince de soudage (12), qui est adapté pour mettre en oeuvre un procédé selon l'une des revendications 1 à 8.

**10.** Système d'une pince de clinchage et d'un dispositif de commande pour actionner la pince de clinchage, qui est adapté pour mettre en oeuvre un procédé selon l'une des revendications 1 à 8.

**11.** Système d'une pince de sertissage et d'un dispositif de commande pour actionner la pince de sertissage, qui est adapté pour mettre en oeuvre un procédé selon l'une des revendications 1 à 8.

**12.** Système d'un outil de serrage et d'un dispositif de commande pour actionner l'outil de serrage, qui est adapté pour mettre en oeuvre un procédé selon l'une des revendications 1 à 8.

## FIG. 1

## FIG. 2

FIG. 3

**IN DER BESCHREIBUNG AUFGEFÜHRTE DOKUMENTE**

**In der Beschreibung aufgeführte Patentdokumente**

- DE 102006016196 A1
- WO 03008145 A1